# EUROPÄISCHE PATENTANMELDUNG

(11) **EP 4 599 682 A2**
(43) Veröffentlichungstag der Anmeldung: **13.08.2025**
(21) Anmeldenummer: 24220464.2
(22) Anmeldetag: 17.12.2024
(51) Int. Cl.: A22C 11/02, A22C 11/04

(54) **PORTIONIERVORRICHTUNG, INSBESONDERE FÜLLVORRICHTUNG FÜR VISKOSE LEBENSMITTEL-MASSE**

(30) Priorität: 18.12.2023 DE 102023135493
(71) Anmelder: VEMAG Maschinenbau GmbH, 27283 Verden/Aller (DE)
(72) Erfinder: Westermann, Niels, 29643 Neuenkirchen (DE)
(74) Vertreter: Eisenführ Speiser

(57) **Zusammenfassung**

Die Erfindung betrifft eine Portioniervorrichtung (1) zum Abgeben von getrennten Portionen aus fließfähiger viskoser Lebensmittel-Masse, insbesondere grobstückiger und/oder faseriger Masse, mit einem Zylinder-Gehäuse (8) mit einem inneren Zylinder-Raum (9), welcher durch eine äußere Gehäuse-Wand (12) begrenzt ist, einem in dem Zylinder-Raum (9) hin- und her bewegbaren Kolben (10) zum Fördern der Masse innerhalb des Raumes (9) und Ausstoßen der Masse aus einer Abgabeöffnung (16) des Zylinder-Gehäuses (8), wobei der Kolben (10) eine äußere Schnittkante (11) aufweist, einer Antriebseinrichtung (6) zum Antreiben des Kolbens (10), wobei in der den Zylinder-Raum (9) begrenzenden Gehäuse-Wand (12) seitlich eine durchgehende Einlass-Wand-Öffnung (13) ausgebildet ist, durch welche viskose Masse in den Zylinder-Raum (9) eingebracht werden kann, wenn der Kolben (10) die Öffnung (13) nicht verschließt, und der Kolben (10) während seiner Bewegung in axialer Richtung entlang der Öffnung (13) mittels der Schnittkante (11) eine Trennung der Masse im Zylinder-Raum (9) von der Masse im Bereich der Öffnung (13) bewirkt. Erfindungsgemäß ist der an den Zylinder-Raum (9) angrenzende Rand der Öffnung (13) in einem unteren Bereich (B) mit zwei nicht kreisförmigen Schnittkantenabschnitten (18, 20) ausgebildet welche in einem Winkel relativ zueinander angeordnet sind und in Ausstoßrichtung (A) aufeinander zulaufen.

## Beschreibung

Die Erfindung betrifft eine Portioniervorrichtung nach dem Oberbegriff des Anspruchs 1.

Eine bekannte Vorrichtung der eingangs genannten Art ist der sogenannte Füllkopf Typ 981 der Anmelderin VEMAG. Portioniervorrichtungen der genannten Art dienen zum Portionieren und/oder Abfüllen von Lebensmittelprodukten verschiedener Art, die aus einer fließfähigen, viskosen und auch oft hoch viskosen Lebensmittel-Masse hergestellt werden. Bei der Lebensmittel-Masse kann es sich beispielsweise handeln um Fleisch oder fleischhaltige Massen, auch grobstückige, sehnige oder faserige Massen zum Herstellen von Produkten wie beispielsweise Wurst, Kochwurst, Fleischwurst, Leberwurst, Cornedbeef, Eisbeinfleisch, Frischkäse oder auch Feinkostsalate.

Die viskose und ggf. grobstückige und/oder sehnige Lebensmittel-Masse wird meist von einer Füllmaschine bereitgestell, die einen Fülltrichter zur Aufnahme der Masse, eine Pumpe zum Fördern und eine der Pumpe nachgeschaltete Zuführleitung zum Zuführen der Masse zu der Portioniervorrichtung aufweist. Die Masse wird mithilfe der Portioniervorrichtung in Portionen mit variablen Mengen getrennt. Häufig sollen die Portionen mittels der Portioniervorrichtung in Verpackungen verschiedener Art wie Gläser, Dosen, Schalen, Becher o.dgl. gefüllt werden; weswegen die Portioniervorrichtungen dann als Füllkopf bezeichnet werden. Generell wird angestrebt, dass Lebensmittel verschiedener Art in einer gewünschten Menge schnell, zuverlässig und möglichst genau dosiert in "gewichtsgenauen" Portionen von der Portioniervorrichtung bereitgestellt wird.

Die Portioniervorrichtung weist ein Zylinder-Gehäuse und einen innerhalb des Zylinder-Gehäuses mittels einer Antriebseinrichtung hin- und her bewegbaren oder verfahrbaren Kolben auf. Das Gehäuse und der Zylinder-Raum ist wesentlich durch eine Gehäuse-Wand definiert und begrenzt. Der Kolben ist innerhalb des Zylinder-Raumes mit geringem Spiel oder auch partiell in Kontakt mit der inneren Oberfläche der Wand so abgedichtet angeordnet, dass die Lebensmittel-Masse bei Bewegung des Kolbens in eine Ausstoßrichtung im Wesentlichen axial in Richtung der Längsachse des Zylinder-Raumes und des Kolbens gefördert werden kann. Die Antriebseinrichtung zum Hin- und Herbewegen des Kolbens kann beispielsweise pneumatisch, elektrisch oder hydraulisch ausgebildet sein.

Zum Zuführen und Einführen der fließfähigen Lebensmittel-Masse in den Zylinder-Raum ist in der Gehäuse-Wand eine diese durchdringende Einlass-Wand-Öffnung ausgebildet. Durch diese - vorzugsweise seitliche - Einlauf-Öffnung wird die zu portionierende Masse zugeführt und in den Zylinder-Raum eingeleitet, insbesondere unter Verwendung einer Füllmaschine, deren Zuführleitung mit der Einlauf-Öffnung in der Wand in unmittelbarer oder mittelbarer Verbindung steht.

Bei im Stand der Technik bekannten Portioniervorrichtungen weist die seitliche Einlauf-Wand-Öffnung einen kreisförmigen, zylindrischen Querschnitt auf. Ist der Kolben in einer beispielsweise oberen Stellung angeordnet und die Öffnung freigegeben, wird die viskose Masse in den Zylinder-Raum eingefüllt. Dann wird der Kolben - beispielsweise nach unten - in Ausstoßrichtung bewegt und kommt in den Bereich der Öffnung und trennt dabei mit seiner unteren seitlichen kreisringförmigen Schnittkante die Masse von der in der Zuführleitung und Öffnung befindlichen Masse ab und verschließt dann die Öffnung und fördert die Masse in einer weiteren axialen Bewegung in Ausstoßrichtung z.B. nach unten innerhalb des Zylinder-Raumes weiter, sodass die Masse gefördert und dann durch eine axial bezogen auf die Längsachse des Gehäuses befindliche Austrittsöffnung in einer portionierten Menge von der Portioniervorrichtung abgegeben werden kann, insbesondere in eine Verpackung. Während der Bewegung des Kolbens entlang der Einlauf-Wand-Öffnung trennt die untere ringförmige Schnittkante des Kolbens wenigstens teilweise auch etwaige Fasern, Sehnen oder auch grobe Stücke durch einen trennenden Schnitt ab.

Ziel dabei ist, eine möglichst vollständige Abtrennung der Masse und auch etwaiger Fasern, Sehnen, grober Stücke oder andere Bestandteile der Masse. Bei Portioniervorrichtungen im Stand der Technik mit kreisrunden Querschnitt der Einlauf-Öffnung wird in nachteiliger Weise oft beobachtet, dass die viskose, grobstückige und/oder sehnige Masse von den Kolben mehr abgequetscht wird als sauber abgeschnitten. Feine Sehnen, Fasern, Fäden oder auch feste Partikel wie beispielsweise Knorpel oder Knochenreste werden dabei oft nicht vollständig durch den bewegten Kolben abgeschnitten und nicht vollständig getrennt, und gelangen unerwünscht in enge Spalte zwischen Kolben und Gehäuse-Wand und verbleiben mitunter auch im Bereich der Einlauf-Öffnung. Auch ist beobachtet worden, dass kleine Sehnen, Fasern oder Partikel wie Fleischstücke am Kolben kleben bleiben insbesondere auch wegen Sehnen, sodass sie auch nach dem Ausstoßen der portionierten Massen von der Portioniervorrichtung am Kolben bleiben, dort gewissermaßen festkleben. Dadurch entstehen bei bekannten Portioniervorrichtungen zuweilen Gewichtsschwankungen der Portionen, d.h. die einzelnen Portionen weisen unterschiedliche Gewichte auf. Auch wird durch die teilweise unsaubere oder nicht vollständige Abtrennung der Masse, insbesondere Sehnen, Fasern oder dergleichen die Geschwindigkeit des Portionierprozesses nachteilig beeinflusst. Auch kann Verschleiß der Portioniervorrichtung, insbesondere des Kolbens aber auch der Ränder der Öffnung und die Abdichtung zwischen Kolben und Gehäuse verschlechtert werden. EP 2 215 912 B2 offenbart ein sogenanntes Schneidventil, welches einen Kolben aufweist, der gleichzeitig translatorisch und rotatorisch antreibbar ist, was hierfür geeignete Antriebe bzw. Getriebe bzw. Führungen bedarf.

Aufgabe der vorliegenden Erfindung ist es vor diesem Hintergrund, eine gegenüber den bekannten Vorrichtungen verbesserte Portioniervorrichtung zum Bereitstellen von Portionen von Lebensmittel-Masse, insbesondere grobstückige oder faserige Masse, anzugeben, die insbesondere eine verbesserte Trennung der Portionen von Masse durch den Kolben im Bereich der Öffnung auch bei sehnigen oder grobstückigen Massen erreicht, inbesondere bei geringem konstruktiven Aufwand.

Die Erfindung löst die Aufgabe bei einer Portioniervorrichtung der eingangs genannten Art dadurch, dass der an den Zylinder-Raum angrenzende Rand der Öffnung in einem unteren Bereich mit zwei nicht kreisförmigen Schnittkantenabschnitten ausgebildet ist, welche in einem Winkel relativ zueinander angeordnet sind und in Ausstoßrichtung aufeinander zulaufen (Anspruch 1).

Vorteile der Erfindung sind insbesondere, dass aufgrund der Gestaltung der Form des Randes der Wand-Öffnung bei der Förder- oder Ausstoßbewegung des Kolbens entlang der Öffnung eine deutlich verbesserte, vollständige und somit saubere Trennung auch von faserigen Lebensmittel-Massen erfolgt. Dies wird erreicht durch die erfindungsgemäße Gestaltung des Randes der Öffnung des Gehäuses zum Einleiten der Masse derart, dass dieser an den Zylinder-Raum angrenzende Rand der Öffnung in einem - vorzugsweise unteren - Bereich mit zwei nicht kreisförmigen Schnittkantenabschnitten ausgebildet ist, welche in einem Winkel zueinander angeordnet sind und in Ausstoßrichtung des Kolbens wenigstens teilweise aufeinander zu laufen. Unter vorzugsweise unterem Bereich wird hierbei verstanden ein Teilbereich des Randes der Öffnung, welcher in Ausstoßrichtung des Kolbens stromabwärts angeordnet ist, d.h. nicht zu Beginn der Bewegung des Kolbens entlang der Einlass-Öffnung passiert werden, sondern erst im weiteren Verlauf der Ausstoßbewegung in Ausstoßrichtung des Kolbens. Vorzugsweise sind die Schnittkantenabschnitte der Öffnung im sogenannten unteren Bereich angeordnet, d.h. in einem Bereich stromabwärts nach einem maximalen Durchmesser der Öffnung oder einer maximalen Erstreckung der Öffnung; vorzugsweise in einem Bereich nach etwa hälftiger Bewegungsstrecke des Kolbens entlang der Öffnung in Ausstoßrichtung. Die Schnittkantenabschnitte sind nicht kreisförmig ausgebildet, und zwar derart, dass sie in einem Winkel relativ zueinander und gegenüberliegend angeordnet sind und sich in Ausstoßrichtung gesehen aneinander annähern, aufeinander zu laufen. Durch diese erfindungsgemäße Form der Schnittkantenabschnitte wird während der Bewegung der Schnittkante des Kolbens eine besonders gute Schneid- oder Schnittwirkung erzielt und auch faserige, grobstückige oder klumpige Abschnitte der Lebensmittel-Masse werden gut abgetrennt während der Schnitt- oder Schneidbewegung. So werden auch feine Sehnen oder Fasern oder Fäden besser und vollständiger abgetrennt, nach Art eines Scherenschnitts, bei dem aufgrund der nicht kreisförmigen und aufeinander zu laufenden Schnittkantenabschnitte ein verbesserter Schnittwinkel an den Schneidkanten oder Schnittkanten relativ zur Schnittkante des Kolbens entsteht. Dadurch kommt es erfindungsgemäß zu weniger Ansammlungen von Fäden, Fasern, Sehnen oder dergleichen im Bereich der Öffnung und der Schnittkanten, und der Förder- und Schneidprozess wird zuverlässiger, verschleißärmer und mit gleichmäßigeren, genaueren Portionsgrößen als im Stand der Technik ausgeführt.

Erfindungsgemäß ist vorgesehen, dass die Schnittkantenabschnitte in einer Seitenansicht im Wesentlichen eine V-Form bilden. Die stromabwärts angeordneten Schnittkantenabschnitte können dabei erfindungsgemäß teilweise exakt wenigstens einen Teil einer V-Form bilden, was der Fall ist, wenn diese Schnittkantenabschnitte im Wesentlichen gerade sind und in einem Winkel aufeinander zu laufen in Ausstoßrichtung, sie könnten aber auch an eine V-Form angenähert sein, was dann der Fall wäre, wenn die Schnittkantenabschnitte nicht exakt wenigstens teilweise eine Gerade bilden, sondern auch leicht gekrümmte, nicht kreisförmige Abschnitte aufweisen, die einer V-Form angenähert sind. Auch könnte beispielsweise eine Art U-Form mit aufeinander zu laufenden nicht kreisförmigen Schnittkantenabschnitten annähernd eine bevorzugt erfindungsgemäße V-Form bilden. Durch eine derartige V-Form wird der effektive Scherenschnitt weiter verbessert, und es wird ein akkurates Schneiden durch den in Ausstoßrichtung bewegten Kolben im Bereich der Abgabeöffnung erreicht. Der Kolben mit seiner Schnittkante wird entlang der Schnittkantenabschnitte der Öffnung geführt und kann dabei wenigstens teilweise in Kontakt kommen mit den Schnittkantenabschnitten oder sehr dicht entlang dieser geleiten.

Gemäß einer bevorzugten Ausführungsform wird vorgeschlagen, dass die Schnittkantenabschnitte sich in einem Endbereich treffen, welcher bei axialer Bewegung des Kolbens in Ausstoßrichtung als letztes von der umlaufenden Schnittkante des Kolbens passiert wird. Der Endbereich wird also von dem Kolben während seiner Bewegung in Ausstoßrichtung als letztes passiert, kurz bevor die Öffnung dann durch den weiteren Abschnitt des Kolbens verschlossen wird. Dieser Endbereich ist also dann, wenn der Kolben bei einer bevorzugten Ausführungsform mit seiner Längsachse im Wesentlichen vertikal ausgerichtet ist, zuletzt oder unten bei vertikal angeordnetem Kolben mit Ausstoßrichtung nach unten angeordnet im Bereich der Öffnung. Der Endbereich ist also dann der untere Bereich der Öffnung. Bevorzugt ist insoweit eine symmetrische Anordnung, bei der der Endbereich dann in einer Seitenansicht zentral mittig mit Bezug auf die Längsachse des Kolbens angeordnet ist und als letztes während der Ausstoßbewegung im Bereich der Öffnung passiert wird.

Besonders bevorzugt ist es, dass der Endbereich in einer Seitenansicht im Wesentlichen kreisförmig ist. Dabei ist es weiterhin bevorzugt, dass der kreisförmige Endbereich einen Radius im Bereich von 0,5 bis 5 mm, vorzugsweise von 1 bis 2 mm, besonders bevorzugt in einem Bereich von 1,5 mm ausbildet ist. Besonders vorteilhaft ist es, wenn der Endbereich also einen kleinen fertigungstechnisch gerade noch möglichen kleinen Radius oder einer Kreisform angenäherte Form aufweist. So wird ein besonders guter Schnitt erreicht und Ansammlungen von Sehnen, Partikeln oder dergleichen werden vermieden. Es wird ein sauberer Schnitt hergestellt im Betrieb.

Gemäß einer bevorzugten Weiterbildung ist vorgesehen, dass die Öffnung in einer Seitenansicht im Wesentlichen eine Tropfenform aufweist, wobei im Wesentlichen in einem spitzen Winkel aufeinander zu verlaufende Schnittkantenabschnitte in einem Bereich der Öffnung angeordnet ist, die als letztes von dem Kolben bei dessen Bewegung in Ausstoßrichtung passiert wird. Eine derartige Tropfenform in einem weiteren Sinne hat sich im Betrieb als vorteilhaft erwiesen. Dabei kann in dem oberen, bei vertikaler Anordnung des Kolbens, Bereich der Öffnung, beispielsweise der oberen Hälfte der Rand der Öffnung im Wesentlichen kreisförmig sein, und im unteren Bereich, also vorzugsweise in der unteren Hälfte oder der im zweiten Bewegung-Teil durchlaufende Abschnitt sind die teilweise in einem spitzen Winkel aufeinander zu verlaufenden Schnittkantenabschnitte ausgebildet. So ist eine Tropfenform angenähert oder weitgehend verwirklicht bei einer Seitenansicht.

Es hat sich ferner als vorteilhaft herausgestellt mit Blick auf den effektiven Schnitt, dass die im Wesentlichen aufeinander zu verlaufenden Schnittkantenabschnitte in einem Winkel im Bereich von 30 bis 60°, vorzugsweise 35 bis 50° und besonders bevorzugt von etwa 45° relativ zueinander angeordnet sind.

Gemäß einer weiteren vorteilhaften Ausführungsform wird vorgeschlagen, dass stromabwärts von der Öffnung in Ausstoßrichtung des Kolbens das Zylinder-Gehäuse eine Länge von ca. 50 bis 150 mm, bevorzugt von 80 bis 120 mm hat, die von dem Kolben passiert (oder abgefahren) werden kann. Dadurch, dass hier der Kolben nach dem Passieren der Öffnung noch eine relativ lange Wegstrecke abfahren kann und währenddessen die zuvor sauber abgetrennte Masse ein ganzes Stück weit weiter innerhalb eines Zylinder-Gehäuses gefördert wird, wird eine saubere Abtrennung der geförderten Portion weiter positiv beeinflusst.

Der Kolben kann gemäß eines weiteren Aspekts der Erfindung oder bevorzugt mit einer Zusatzbewegung von einer weiteren Strecke, insbesondere mithilfe eines Kurzhubzylinders, angetrieben werden, um den Kolben in einer intermittierenden Schüttelbewegung bewegen zu können. Ferner kann dann auch mithilfe der Antriebseinrichtung für den Kolben ein "Zusatzschlag" ausgeführt werden, d.h. eine Hin-und Herbewegung des Kolbens oder auch eine Art Schüttelbewegung, um die Lebensmittel-Masse, das Produkt vom Kolben zu lösen und durch eine rückartige Bewegung abzuwerfen.

Ein herstellungstechnischer Vorteil ergibt sich ferner bei einer Weiterbildung, gemäß welcher das Zylinder-Gehäuse in mehrere voneinander separierbare, koppelbare Gehäuse-Abschnitte teilbar ist, wobei die Einlauf-Wand-Öffnung im Bereich eines Abschnitts ausgebildet ist. Besonders bevorzugt ist es insoweit, dass die Öffnung in einem Gehäuse-Wandabschnitt ausgebildet ist, der einen vergrößerten äußeren Durchmesser bzw. vergrößerte radiale Breite gegenüber benachbarten Gehäuse-Wandabschnitten aufweist. So lassen sich die erfindungsgemäßen Schnittkantenabschnitte gut herstellen und im Bereich der Schnittkanten eine hohe Festigkeit erzielen, auch um Verschleiß und auch hohen mechanischen Kräften und Drücken während der Förderung und Schnittbewegung ausreichend zu begegnen.

Vorzugsweise wird ferner vorgeschlagen, dass das Gehäuse und/oder der Kolben mindestens teilweise, insbesondere im Bereich der Schnittkante des Kolbens und/oder dem Bereich der Öffnung vorzugsweise im Bereich der Schnittkantenabschnitte gehärtet sind und/oder aus gehärtetem Stahl, insbesondere gehärtetem Edelstahl bestehen; dadurch wird der Schnitt weiter optimiert und der Verschleiß reduziert.

Gemäß einer vorteilhaften Weiterbildung ist vorgesehen, dass der Kolben mindestens innen hohl ist und/oder im Wesentlichen eine zylindrische Form hat und die Schnittkante des Kolbens im Wesentlichen kreisringförmig ausgebildet ist.

Gemäß einer weiteren vorteilhaften Weiterbildung wir vorgeschlagen, dass eine Portioniervorrichtung gekoppelt wird mit einer Füllmaschine mit einem Fülltrichter und einer Förderpumpe und einer Zuführleitung, wobei die Zuführleitung unmittelbar oder mittelbar mittels weiterer Leitungsabschnitte mit der Einlass-Öffnung des Gehäuses verbindbar ist, um viskose Masse durch die Öffnung in den Zylinder-Raum einleiten zu können. Eine derartige Füllmaschine hat sich sehr bewährt zum Zuführen von Lebensmittel-Masse, insbesondere auch Wurstmasse.

Ferner wird zweckmäßiger Weise vorgeschlagen, dass die Antriebseinrichtung der Portioniervorrichtung mittels einer der Füllmaschine zugeordneten Steuerung ansteuerbar ist, wobei die Steuerung so ausgebildet ist, dass die Antriebseinrichtung der Portioniervorrichtung und ein Antrieb der Pumpe der Füllmaschine aufeinander abgestimmt vorzugsweise intermittierend angetrieben werden können.

Die Erfindung wird anhand bevorzugter Ausführungsbeispielen nachfolgend im Detail beschrieben, es zeigen:
- Fig. 1: eine Füllmaschine mit stromabwärts angeordneter Portioniervorrichtung mit beispielhaft im Wesentlichen vertikal angeordnetem Kolben und Zylinder-Gehäuse in einer Seitenansicht;
- Fig. 2: die erfindungsgemäße Portioniervorrichtung in einer Schnittdarstellung in Seitenansicht;
- Fig. 3: ein Abschnitt des Zylinder-Gehäuses mit Einlass-Öffnung in der Wand des Gehäuses in perspektiver Ansicht;
- Fig. 4: ein Kolben mit ringförmiger Schnittkante am unteren Ende in perspektivischer Ansicht;
- Fig. 5: eine perspektivische Teilansicht mit geöffnetem Gehäuse und sichtbarem Kolben zu Beginn der Schnittbewegung entlang der Öffnung;
- Fig. 6: eine vergrößerte Darstellung in die Öffnung des Gehäuses mit tropfenförmigen und V-förmig angeordneten Schnittkantenabschnitten;
- Fig. 7: eine perspektivische Ansicht des teilweise geöffneten Gehäuses mit weiter in Ausstoßrichtung bewegtem Kolben, der die Öffnung in etwa zur Hälfte verschlossen hat und sich in Richtung der Schnittkantenabschnitte weiter fortbewegt;
- Fig. 8: perspektivische Ansicht gemäß Fig. 7 mit weiter in Ausstoßrichtung bewegtem Kolben;
- Fig. 9: perspektivische Ansicht gemäß Fig. 7 mit weiter in Ausstoßrichtung bewegtem Kolben, wobei das Ende des Scherenschnittes erreicht ist;
- Fig. 10: eine perspektivische Ansicht eines Abschnitts des Gehäuses mit weiter in Ausstoßrichtung bewegtem Kolben in einer Position im Bereich des sogenannten Zusatzschlags; und
- Fig. 11: eine vergrößerte Ansicht eines Abschnitts des Gehäuses mit Öffnung und winkligen Schnittkantenabschnitten und Endbereich.

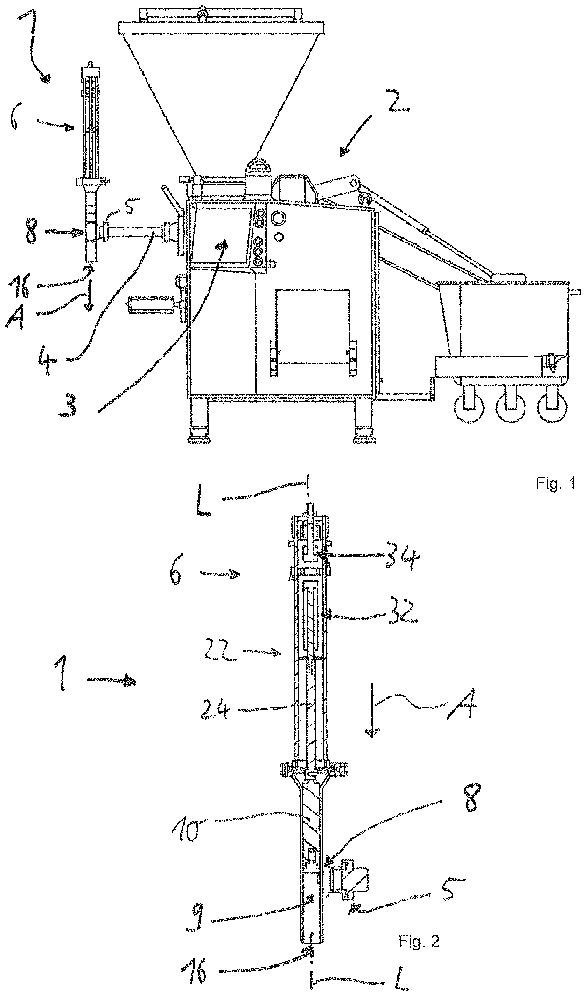

Fig. 1 und 2 zeigen eine Portioniervorrichtung 1 zum Abgeben von getrennten Portionen aus fließfähiger viskoser Lebensmittel-Masse, insbesondere grobstückiger und/oder faseriger Masse. Die Portioniervorrichtung 1 ist gekoppelt und wird gespeist mit einer Füllmaschine 2 mit einem Fülltrichter und einer Förderpumpe und einer Zuführleitung 4 zum Zuführen der Masse zu der Portioniervorrichtung 1. In an sich bekannter Weise weist die Füllmaschine 2 eine Steuerung 3 zum Steuern der Komponenten und vorzugsweise auch einer unten weiter beschriebenen Antriebseinrichtung 6 der Portioniervorrichtung 1 auf.

Wie Fig. 1 und 2 zeigen, weist die Portioniervorrichtung 1 ein Zylinder-Gehäuse 8 mit einem inneren Zylinder-Raum 9, welcher durch eine äußere Gehäuse-Wand 12 des Gehäuses 8 begrenzt ist, auf. Raum 9 ist vorzugsweise wie im Ausführungsbeispiel im engeren Sinne zylindrisch mit einem im Wesentlichen kreisförmigen Querschnitt, es könnten aber auch andere Formen, beispielsweise mit einem rechteckigen Querschnitt vorgesehen sein.

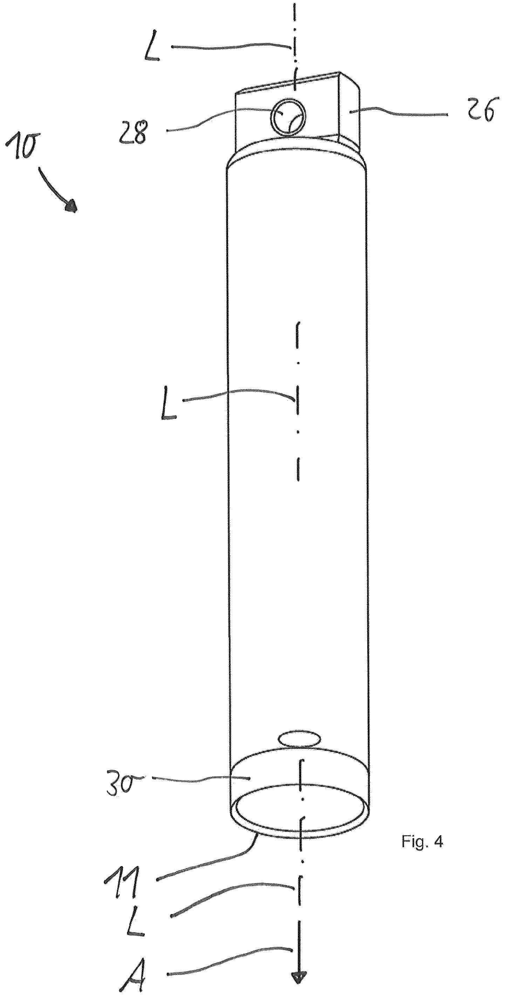

Wie in Figur 2 ersichtlich, ist in dem Zylinder-Raum 9 ein hin- und her bewegbaren Kolben 10 zum Fördern der Masse innerhalb des Raumes 9 und Ausstoßen der Masse aus einer Abgabeöffnung 16 des Zylinder-Gehäuses 8 angeordnet. Der in Figur 4 isoliert gezeigte Kolben 10 hat an seinem - im Ausführungsbeispiel unteren - Ende eine äußere kreisringförmig umlaufende Schnittkante 11. Das Gehäuse 8 und/oder der Kolben 10 sind mindestens teilweise, insbesondere im Bereich der Schnittkante 11 des Kolbens 10 und/oder dem Bereich der Öffnung 13 und vorzugsweise im Bereich von unten näher beschriebenen Schnittkantenabschnitten 18, 20 gehärtet. Vorzugsweise ist das Gehäuse 8 und Kolben 10 aus gehärtetem Stahl, insbesondere gehärtetem Edelstahl ausgebildet.

Der in Figur 4 vergrößert und isoliert gezeigte Kolben 10 kann im Wesentlichen aus Vollmaterial ausgebildet sein oder alternativ auch teilweise innen hohl sein. Wie Figur 4 gut zeigt, hat der Kolben 10 im Wesentlichen eine zylindrische Form. An einem Ende - oben bei vertikaler Ausrichtung der Längsachse L - weist er einen Anschlussblock 26 mit einer Bohrung 28 auf. Die am gegenüberliegenden, im Beispiel unteren Ende ausgebildete Schnittkante 11 des Kolbens 10 kann wie dargestellt an einem separaten, aber fest am Kolben 10 montierten Schnittkanten-Bauteil 30 ausgebildet sein und ist im Wesentlichen kreisringförmig.

Die Antriebseinrichtung 6 dient zum Antreiben des Kolbens 10 innerhalb des ZylinderRaums 9. Die Antriebseinrichtung 6 der Portioniervorrichtung 1 ist im Ausführungsbeispiel mittels der der Füllmaschine 2 zugeordneten Steuerung ansteuerbar, es könnte aber auch eine separate oder weitere Steuerung insbesondere der Portioniervorrichtung 1 zum Einsatz kommen. Die Steuerung 3 der Füllmaschine 2 ist im Ausführungsbeispiel ausgebildet derart, dass die Antriebseinrichtung 6 der Portioniervorrichtung 1 ein Antrieb der Pumpe der Füllmaschine 2 aufeinander abgestimmt vorzugsweise intermittierend angetrieben werden können. Vornehmlicher Zweck der Antriebseinrichtung 6 ist, dass der Kolben 10 in Ausstoßrichtung A während seiner Bewegung in dem Zylinder-Raum 9 in axialer Richtung entlang der Öffnung 13 mittels der Schnittkante 11 eine Trennung der Masse im Zylinder-Raum 9 von der Masse im Bereich der Öffnung 13 bewirkt; und ferner, dass die Masse axial in Richtung einer Abgabeöffnung 16 des Zylinder-Gehäuses 8 portioniert abgegeben werden kann, beispielsweise in eine Verpackung. Die Antriebseinrichtung 6 zum Hin- und Herbewegen des Kolbens kann beispielsweise pneumatisch, elektrisch oder hydraulisch ausgebildet sein. Im Ausführungsbeispiel gemäß Figuren 1 und 2 ist ein pneumatischer Antrieb verwirklicht, bei dem mithilfe von Druckluft ein pneumatischer Antriebs-Kolben 22 hin und her bewegt wird, welcher mittels einer Stange 24 den Kolben 10 hin und her bewegt. Die Antriebseinrichtung 6 ist unten weiter beschrieben.

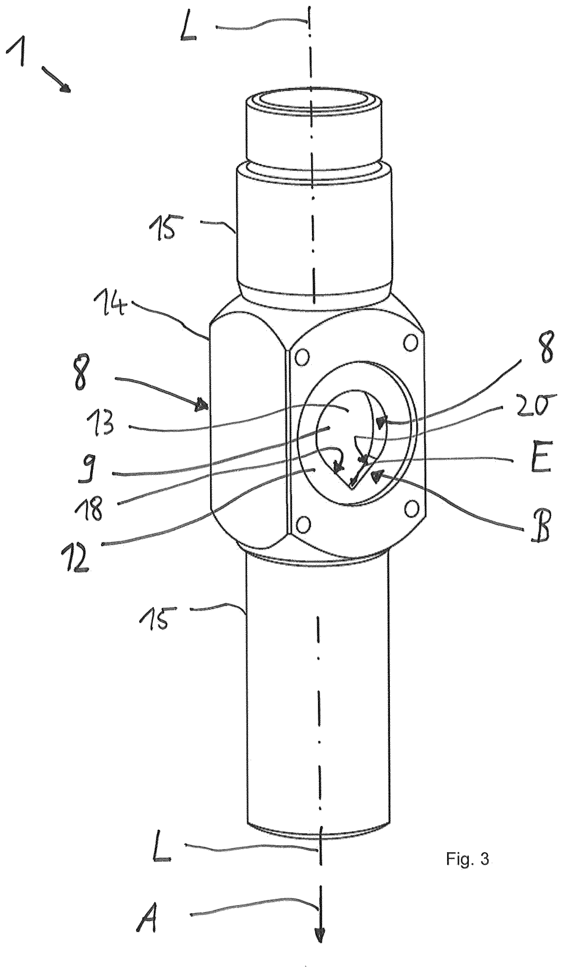

Wie die Figuren (z. B. Figur 3 sowie Figuren 5-11) weiter zeigen, ist in der den Zylinder-Raum 9 begrenzenden Gehäuse-Wand 12 seitlich - radial bezogen auf die Längsachse L des Kolbens 10 und des Zylinder-Gehäuses 8 - eine durchgehende Einlass-Wand-Öffnung 13 ausgebildet ist, durch welche viskose Masse aus der Füllmaschine 2 durch die Zuführleitung 4 und einen Anschluss-Flansch 5 in den Zylinder-Raum 9 eingebracht werden kann, und zwar dann, wenn der Kolben 10 die Öffnung 13 nicht verschließt, was im Ausführungsbeispiel der Fall ist, wenn der Kolben 10 oben innerhalb des ZylinderRaums 9 angeordnet ist, wie die Figuren 2, 5 und 11 exemplarisch zeigen. Wie Figur 1 zeigt, ist die Zuführleitung 4 unmittelbar oder mittelbar mittels des Flansches 5 und eventuell weiterer nicht gezeigter Leitungsabschnitte mit der Einlass-Öffnung 13 des Gehäuses 8 verbindbar, um viskose Masse durch die Öffnung 13 in den Zylinder-Raum 9 einleiten zu können.

Das Zylinder-Gehäuse 8 ist in mehrere voneinander separierbare, koppelbare Gehäuse-Wandabschnitte 14, 15 teilbar, wobei die Einlauf-Wand-Öffnung 13 im Bereich eines Abschnitts 14 ausgebildet ist. Die Öffnung 13 ist im Ausführungsbeispiel in dem Gehäuse-Wandabschnitt 14 ausgebildet, der einen vergrößerten äußeren Durchmesser bzw. vergrößerte radiale Breite gegenüber den benachbarten Gehäuse-Wandabschnitten 15 aufweist, siehe Figur 3. Die Wandabschnitte können miteinander verschraubt oder verschweißt sein.

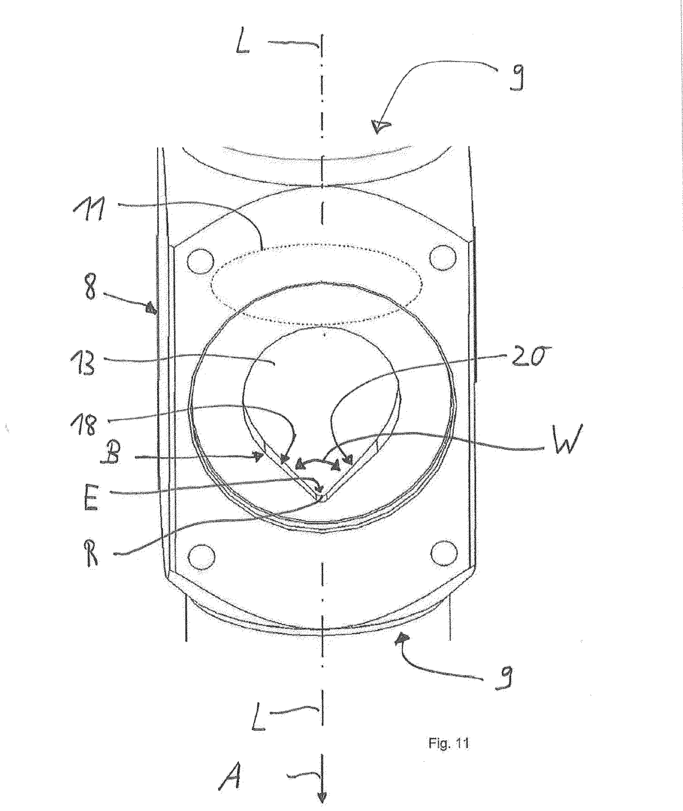

Wie insbesondere Figuren 3 und die vergrößerte Figur 11 zeigen, ist der an den Zylinder-Raum 9 angrenzende - im Wesentlichen nach innen weisende - Rand der Öffnung 13 in einem - vorzugsweise unteren - Bereich B mit zwei nicht kreisförmigen Schnittkantenabschnitten 18, 20 ausgebildet ist, welche in einem Winkel relativ zueinander angeordnet sind und in Ausstoßrichtung A aufeinander zulaufen. Wie gut in Figur 11 ersichtlich ist, ist der Bereich B in Ausstoßrichtung A des Kolbens 10 mit seiner dort gestrichelt gezeichneten Schnittkante 11 stromabwärts angeordnet, d. h. in einem Bereich, der nicht zuerst bei Bewegung des Kolbens 10 in Ausstoßrichtung A abgefahren wird, sondern erst später und zwar dann, wenn der Kolben 10 bereits einen ersten, im Ausführungsbeispiel oberen Teil der Öffnung 13 passiert hat. In diesem Bereich B sind die nicht kreisförmigen Schnittkantenabschnitte 18, 20 des Gehäuses im Bereich der Öffnung 13 angeordnet. Im Ausführungsbeispiel hat die Öffnung 13 insgesamt in der Seitenansicht, siehe beispielsweise Figur 11, eine Tropfenform, die im oberen, ersten Teil einen kreisförmigen Rand hat, während im zweiten unteren Teil die besagten Schnittkantenabschnitte 18, 20, teilweise aufeinanderzulaufen und im Wesentlichen geradlinig gebildet sind. Im Ausführungsbeispiel, siehe die Figuren, insbesondere Figur 11, bilden die Schnittkantenabschnitte 18, 20 in einer Seitenansicht im Wesentlichen eine V-Form. Die Schnittkantenabschnitte 18, 20 laufen aufeinander zu und treffen in einem Endbereich E mehr oder weniger aufeinander, wobei dieser Endbereich E bei axialer Bewegung des Kolbens 10 in Ausstoßrichtung A als letztes von der umlaufenden Schnittkante 11 des Kolbens 10 passiert wird.

Der in Figur 11 vergrößerte Endbereich E ist in einer Seitenansicht im Wesentlichen kreisförmig ist oder abgerundet. Der kreisförmige Endbereich E hat vorzugsweise einen Radius R im Bereich von 0,5 bis 5 mm, vorzugsweise von 1 bis 2 mm, besonders bevorzugt in einem Bereich von 1,5 mm. Er ist vorzugsweise möglichst klein ausgebildet, gegebenenfalls auch kleiner als mit einem Radius von 1,5 mm, soweit dies herstellungstechnisch möglich ist.

Auch Figur 3 veranschaulicht, dass die Öffnung 13 in einer Seitenansicht im Wesentlichen eine Tropfenform aufweist, wobei im Wesentlichen in einem spitzen Winkel aufeinander zu verlaufende Schnittkantenabschnitte 18, 20 in einem Bereich der Öffnung 13 angeordnet ist, die als letztes von dem Kolben 10 bei dessen Bewegung in Ausstoßrichtung A passiert wird.

Wie ebenfalls in der vergrößerten Darstellung gemäß Figur 11 gezeigt, sind die im Wesentlichen aufeinander zu verlaufenden Schnittkantenabschnitte 18, 20 in einem Winkel W im Bereich von 30 bis 60°, vorzugsweise 35 bis 50° und besonders bevorzugt von etwa 45° relativ zueinander angeordnet.

Wie ansatzweise in Figur 2 ersichtlich, hat vorzugsweise das Zylinder-Gehäuse 8 stromabwärts von der Öffnung 13 in Ausstoßrichtung A des Kolbens 10 eine Länge von ca. 50 bis 150 mm, bevorzugt von 80 bis 120 mm, die von dem Kolben 10 passiert (oder abgefahren) werden kann. So kann eine Portion mit einer relativ großen Größe und Länge und Menge generiert werden. Im Betrieb wird mittels der Steuerung bei Bedarf erreicht, dass der Kolben 10 mit einer Zusatzbewegung von einer weiteren Strecke, insbesondere mithilfe eines Kurzhubzylinders angetrieben werden kann, um den Kolben 10 in einer intermittierenden Schüttelbewegung bewegen zu können, sodass anhaftende Lebensmittel-Masse gewissermaßen abgeschüttelt werden kann, hinein in einen Behälter oder dergleichen; diese Bewegung wird auch als Zusatzschlag bezeichnet.

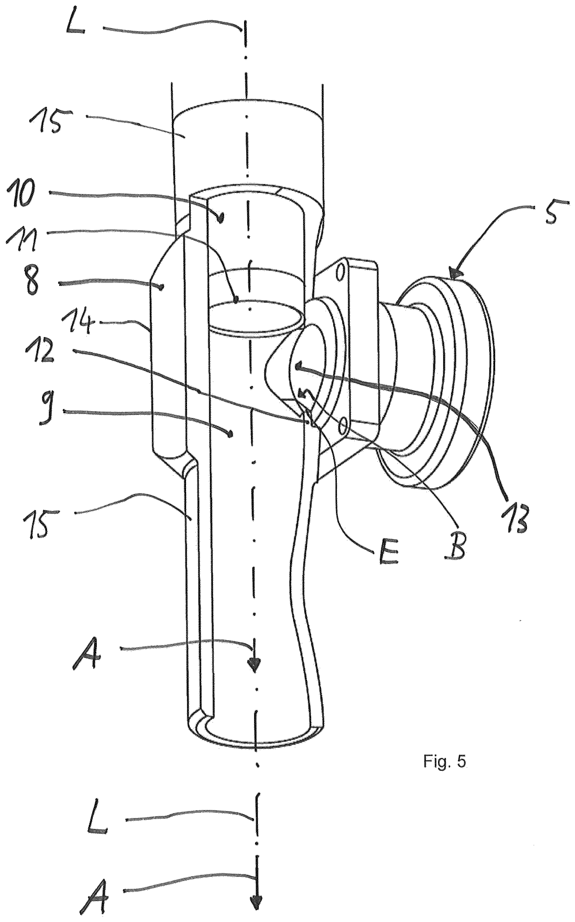

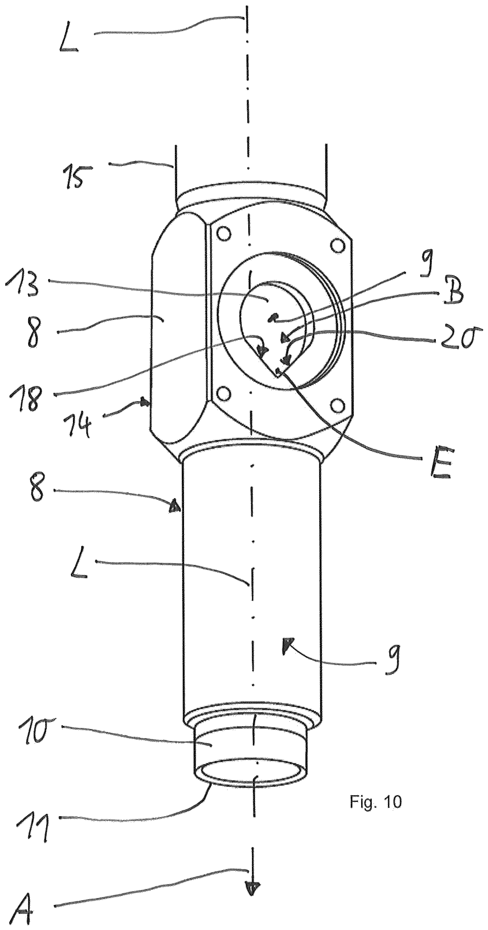

Aus den Figuren 1 und 2 ist ergänzend Folgendes ersichtlich. Die Antriebseinrichtung 6, die im Ausführungsbeispiel als pneumatische Antriebseinrichtung 6 ausgebildet ist, erlaubt einen Haupthub und einen Kurzhub (Zusatzschlag). Der Haupthub wird von einem ersten unteren Kolben 32, der pneumatisch antreibbar ist, erreicht. Dieser Hub bewegt den Kolben 10 von seiner oberen Position weiter in Ausstoßrichtung A, sodass dann das Produkt auf die beschriebene Weise getrennt und ausgestoßen werden kann. Der Haupthub ist definiert in der Regel durch die Länge des Hubs des unteren Kolbens 32 der Antriebseinrichtung 6. Der Kolben 10 zum Trennen und Ausstoßen wird hier im Wesentlichen bewegt von der Oberkante des Einlasses des Produkts durch die Zuführleitung 4 (z.B. Fig. 5), bis der untere Rand des Kolbens 10 mit seiner Schnittkante 11 in etwa bündig an der Abgabeöffnung 16 angeordnet ist. Der Kurzhub wird verwirklicht durch den oberen kurzen Abschnitt der Antriebseinrichtung 6, wo ein zusätzlicher KurzhubZylinder und Kurzhub-Kolben 34 angeordnet ist. Dieser Kurzhub-Kolben und Zusatzzylinder hat beispielsweise 20 mm Hub und verfährt den Kolben 10 von der in etwa bündigen Anordnung unten, wie zuvor anhand von Fig. 10 beschrieben, bis ca. 20 mm außerhalb von der Abgabeöffnung 16. So kann mittels der Antriebseinrichtung 6 ein längerer Haupthub und ein kurzer zusätzlicher Kurzhub verwirklicht werden, insbesondere um auch die beschriebene Schüttelbewegung (Zusatzschlag) am Ende zum Ablösen des Produktes bewirken zu können.

Weitere Details der Portioniervorrichtung 1 und der Füllmaschine 2, die Betriebsweise sowie ein Verfahren zum Portionieren mit der Vorrichtung 1 sind nachfolgend anhand der Figuren beschrieben:
Kolben 10 ist zunächst in einer in Figur 5 gezeigten Stellung jenseits, im Ausführungsbeispiel oberhalb von der Öffnung 13, durch welche Masse von der Füllmaschine durch die Öffnung 13 in den Zylinder-Raum 9 eingeleitet wird und bereits teilweise in die Ausstoßrichtung A strömt. Kolben 10 könnte auch weiter oben positioniert sein. Zum Bewegen und Verfahren des Kolbens 10 steuert die Steuerung 3 die Antriebseinrichtung 6 entsprechend an.

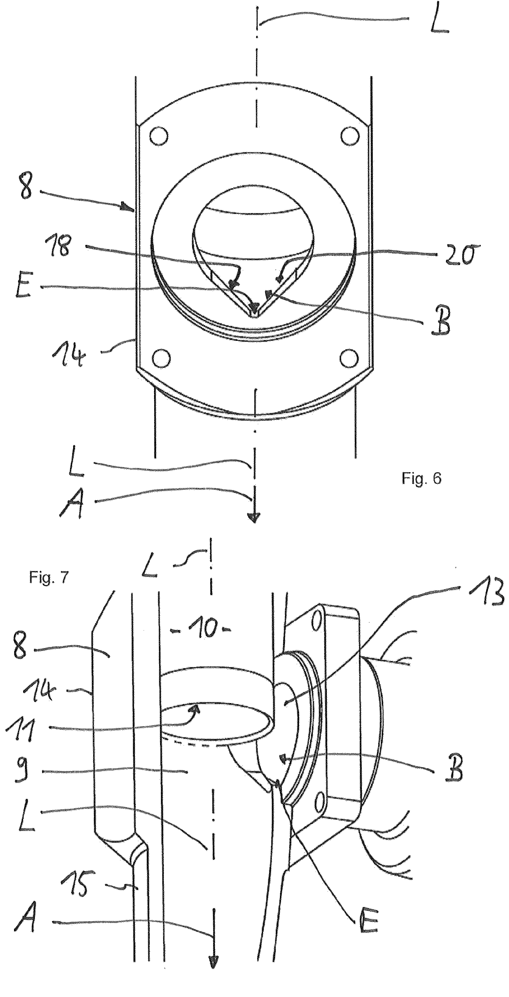

Kolben 10 wird dann im weiteren Verlauf des Prozesses weiter entlang der Öffnung 13 bewegt, vergleiche Figur 6-9.

In Figur 7 ist der Kolben 10 mit seiner Schnittkante 11 während der Bewegung in Richtung A entlang der inneren Ränder der Öffnung 13 bis etwa zur Hälfte oder Mitte der Öffnung 13 und bereits teilweise entlang der Schnittkantenabschnitte 18, 20 bewegt worden und verschließt dabei sukzessive die Öffnung 13 weiter und gleitet entlang der Schnittkantenabschnitte 18, 20, während dessen die Lebensmittel-Masse abgetrennt wird und von dem Kolben in Ausstoßrichtung A gefördert wird.

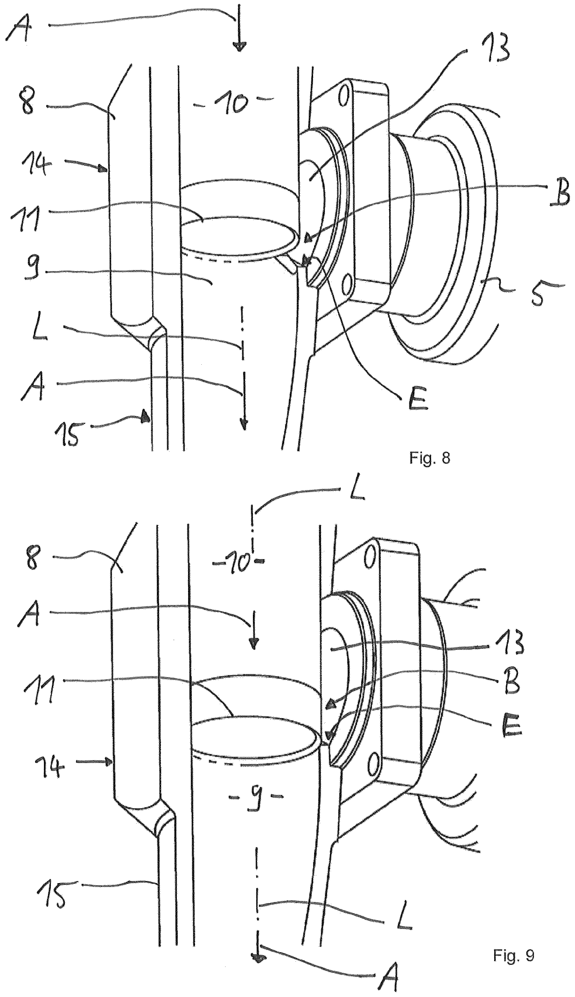

In Figur 8 ist der Kolben fast vollständig entlang der Öffnung 13 bewegt worden, in Figur 9 ist die Öffnung 13 vollständig geschlossen. Die Schnittkante 11 des Kolbens 10 ist dabei entlang der in Seitenansicht, Figur 11, tropfenförmigen Öffnung 13 entlang der etwa V-förmig aufeinander zulaufenden Schnittkantenabschnitte 18, 20 bis in den Endbereich E der Öffnung 13 bewegt worden und hat die Masse vollständig getrennt von der Masse vor der Öffnung 13, die von der Füllmaschine 2 zugeführt wird.

Figur 10 veranschaulicht, dass Kolben 10 weiter durch den Zylinder-Raum 9 des Gehäuses 8 axial in Ausstoßrichtung A bewegt wurde und die Masse weiter gefördert und durch die Abgabeöffnung 16 gegeben hat. In etwa in dieser Phase wird mittels der Steuerung 3 und der Antriebseinrichtung 6 eine Schüttelbewegung des Kolbens 10 mittels Kurzhub-Kolben 34 durchgeführt, um die Masse abzuschütteln. In dieser Phase hat der Kolben 10 in etwa im Wesentlichen den maximalen Hub ausgeführt entlang des Gehäuses 8.

Anschließend kann der Kolben wieder mittels der Antriebseinrichtung 6 axial in die entgegengesetzte Richtung entgegen der Ausstoßrichtung A zurückbewegt werden, die Öffnung 13 wird wieder freigegeben, die Masse strömt wieder durch das Zuführrohr 4 durch die Öffnung 13 in den Zylinder-Raum 9 ein. Nach einer bestimmten Zeit wird der Kolben 10 wieder axial in die Richtung A auf die oben beschriebene Weise gefördert. So können in einem zyklischen intermittierenden Prozess Portionen aus Lebensmittel-Masse in gut abgetrennten präzisen Portionen mit einem bestimmten, variablen Gewicht erzeugt werden.

### Bezugszeichenliste

- 1: Portioniervorrichtung
- 2: Füllmaschine
- 3: Steuerung
- 4: Zuführleitung
- 5: Flansch
- 6: Antriebseinrichtung
- 8: Zylinder-Gehäuse
- 9: Zylinder-Raum
- 10: Kolben
- 11: Kolben-Schnittkante
- 12: Gehäuse-Wand
- 13: (Einlass-Wand-) Öffnung des Gehäuses
- 14: Wandabschnitt des Gehäuses
- 15: Wandabschnitt des Gehäuses
- 16: Abgabeöffnung
- 18: Schnittkantenabschnitt des Gehäuses
- 20: Schnittkantenabschnitt des Gehäuses
- 22: Kolben
- 24: Stange
- 26: Anschlussblock
- 28: Bohrung
- 30: Schnittkanten-Bauteil
- 32: unterer Kolben der Antriebseinrichtung
- 34: Kurzhub-Kolben
- L: Längsachse
- B: unterer Bereich der Öffnung (in Ausstoßrichtung (A) stromabwärts angeordnet)
- E: Endbereich der Öffnung
- A: Ausstoßrichtung der Kolbenbewegung
- W: Winkel

## Patentansprüche

1. Portioniervorrichtung (1) zum Abgeben von getrennten Portionen aus fließfähiger viskoser Lebensmittel-Masse, insbesondere grobstückiger und/oder faseriger Masse, mit
einem Zylinder-Gehäuse (8) mit einem inneren Zylinder-Raum (9), welcher durch eine äußere Gehäuse-Wand (12) begrenzt ist,
einem in dem Zylinder-Raum (9) hin- und her bewegbaren Kolben (10) zum Fördern der Masse innerhalb des Raumes (9) und Ausstoßen der Masse aus einer Abgabeöffnung (16) des Zylinder-Gehäuses (8), wobei der Kolben (10) eine äußere Schnittkante (11) aufweist, einer Antriebseinrichtung (6) zum Antreiben des Kolbens (10),
wobei in der den Zylinder-Raum (9) begrenzenden Gehäuse-Wand (12) seitlich eine durchgehende Einlass-Wand-Öffnung (13) ausgebildet ist, durch welche viskose Masse in den Zylinder-Raum (9) eingebracht werden kann, wenn der Kolben (10) die Öffnung (13) nicht verschließt,
und der Kolben (10) während seiner Bewegung in axialer Richtung entlang der Öffnung (13) mittels der Schnittkante (11) eine Trennung der Masse im Zylinder-Raum (9) von der Masse im Bereich der Öffnung (13) bewirkt,
wobei der an den Zylinder-Raum (9) angrenzende Rand der Öffnung (13) in einem unteren Bereich (B) mit zwei nicht kreisförmigen Schnittkantenabschnitten (18, 20) ausgebildet ist, welche in einem Winkel relativ zueinander angeordnet sind und in Ausstoßrichtung (A) aufeinander zulaufen,
**dadurch gekennzeichnet, dass**
die Schnittkantenabschnitte (18, 20) in einer Seitenansicht im Wesentlichen eine V-Form bilden.

2. Portioniervorrichtung (1) nach Anspruch 1,
**dadurch gekennzeichnet, dass** die Schnittkantenabschnitte (18, 20) sich in einem Endbereich (E) treffen, welcher bei axialer Bewegung des Kolbens (10) in Ausstoßrichtung (A) als letztes von der umlaufenden Schnittkante (11) des Kolbens (10) passiert wird.

3. Portioniervorrichtung (1) nach Anspruch 2,
**dadurch gekennzeichnet, dass** der Endbereich (E) in einer Seitenansicht im Wesentlichen kreisförmig ist.

4. Portioniervorrichtung (1) nach Anspruch 3,
**dadurch gekennzeichnet, dass** der kreisförmige Endbereich (E) einen Radius im Bereich von 0,5 bis 5 mm, vorzugsweise von 1 bis 2 mm, besonders bevorzugt in einem Bereich von 1,5 mm ausbildet ist.

5. Portioniervorrichtung (1) nach mindestens einem der vorstehenden Ansprüche, **dadurch gekennzeichnet, dass** die Öffnung (13) in einer Seitenansicht im Wesentlichen eine Tropfenform aufweist, wobei im Wesentlichen in einem spitzen Winkel aufeinander zu verlaufende Schnittkantenabschnitte (18, 20) in einem Bereich der Öffnung (13) angeordnet ist, die als letztes von dem Kolben (10) bei dessen Bewegung in Ausstoßrichtung (A) passiert wird.

6. Portioniervorrichtung (1) nach mindestens einem der vorstehenden Ansprüche, **dadurch gekennzeichnet, dass** die im Wesentlichen aufeinander zu verlaufenden Schnittkantenabschnitte (18, 20) in einem Winkel (W) im Bereich von 30 bis 60°, vorzugsweise 35 bis 50° und besonders bevorzugt von etwa 45° relativ zueinander angeordnet sind.

7. Portioniervorrichtung (1) nach mindestens einem der vorstehenden Ansprüche, **dadurch gekennzeichnet, dass** stromabwärts von der Öffnung (13) in Ausstoßrichtung (A) des Kolbens (10) das Zylinder-Gehäuse (8) eine Länge von ca. 50 bis 150 mm, bevorzugt von 80 bis 120 mm hat, die von dem Kolben (10) passiert werden kann.

8. Portioniervorrichtung (1) nach mindestens einem der vorstehenden Ansprüche, **dadurch gekennzeichnet, dass** das Zylinder-Gehäuse (8) in mehrere voneinander separierbare, koppelbare Gehäuse-Abschnitte teilbar ist, wobei die Einlauf-Wand-Öffnung (13) im Bereich eines Abschnitts ausgebildet ist.

9. Portioniervorrichtung (1) nach Anspruch 8,
**dadurch gekennzeichnet, dass** die Öffnung (13) in einem Gehäuse-Wandabschnitt (14) ausgebildet ist, der einen vergrößerten äußeren Durchmesser bzw. vergrößerte radiale Breite gegenüber benachbarten Gehäuse-Wandabschnitten (15) aufweist.

10. Portioniervorrichtung (1) nach mindestens einem der vorstehenden Ansprüche, **dadurch gekennzeichnet, dass** das Gehäuse (8) und/oder der Kolben (10) mindestens teilweise, insbesondere im Bereich der Schnittkante (11) des Kolbens (10) und/oder dem Bereich der Öffnung (13) vorzugsweise im Bereich der Schnittkantenabschnitte (18, 20) gehärtet sind und/oder aus gehärtetem Stahl, insbesondere gehärtetem Edelstahl bestehen.

11. Portioniervorrichtung (1) nach mindestens einem der vorstehenden Ansprüche, **dadurch gekennzeichnet, dass** der Kolben (10) mindestens innen hohl ist und/oder im Wesentlichen eine zylindrische Form hat und die Schnittkante (11) des Kolbens (10) im Wesentlichen kreisringförmig ausgebildet ist.

12. Portioniervorrichtung (1) zum Abgeben von getrennten Portionen aus fließfähiger viskoser Lebensmittel-Masse, insbesondere grobstückiger und/oder faseriger Masse, mit
einem Zylinder-Gehäuse (8) mit einem inneren Zylinder-Raum (9), welcher durch eine äußere Gehäuse-Wand (12) begrenzt ist,
einem in dem Zylinder-Raum (9) hin- und her bewegbaren Kolben (10) zum Fördern der Masse innerhalb des Raumes (9) und Ausstoßen der Masse aus einer Abgabeöffnung (16) des Zylinder-Gehäuses (8), wobei der Kolben (10) eine äußere Schnittkante (11) aufweist, einer Antriebseinrichtung (6) zum Antreiben des Kolbens (10),
wobei in der den Zylinder-Raum (9) begrenzenden Gehäuse-Wand (12) seitlich eine durchgehende Einlass-Wand-Öffnung (13) ausgebildet ist, durch welche viskose Masse in den Zylinder-Raum (9) eingebracht werden kann, wenn der Kolben (10) die Öffnung (13) nicht verschließt,
und der Kolben (10) während seiner Bewegung in axialer Richtung entlang der Öffnung (13) mittels der Schnittkante (11) eine Trennung der Masse im Zylinder-Raum (9) von der Masse im Bereich der Öffnung (13) bewirkt,
wobei der an den Zylinder-Raum (9) angrenzende Rand der Öffnung (13) in einem unteren Bereich (B) mit zwei nicht kreisförmigen Schnittkantenabschnitten (18, 20) ausgebildet ist, welche in einem Winkel relativ zueinander angeordnet sind und in Ausstoßrichtung (A) aufeinander zulaufen,
**dadurch gekennzeichnet, dass** der Kolben (10) mit einer Zusatzbewegung von einer weiteren Strecke, insbesondere mithilfe eines Kurzhubzylinders, angetrieben werden kann, um den Kolben (10) in einer intermittierenden Schüttelbewegung bewegen zu können.

13. Portioniervorrichtung (1) nach mindestens einem der vorstehenden Ansprüche 1 bis 11,
**dadurch gekennzeichnet, dass** der Kolben (10) mit einer Zusatzbewegung von einer weiteren Strecke, insbesondere mithilfe eines Kurzhubzylinders, angetrieben werden kann, um den Kolben (10) in einer intermittierenden Schüttelbewegung bewegen zu können

14. Portioniervorrichtung (1) nach mindestens einem der vorstehenden Ansprüche, **dadurch gekennzeichnet, dass** sie gekoppelt wird mit einer Füllmaschine (2) mit einem Fülltrichter und einer Förderpumpe und einer Zuführleitung (4), wobei die Zuführleitung (4) unmittelbar oder mittelbar mittels weiterer Leitungsabschnitte mit der Einlass-Öffnung (13) des Gehäuses (8) verbindbar ist, um viskose Masse durch die Öffnung (13) in den Zylinder-Raum (9) einleiten zu können.

15. Portioniervorrichtung (1) nach mindestens einem der vorstehenden Ansprüche, **dadurch gekennzeichnet, dass** die Antriebseinrichtung (6) der Portioniervorrichtung (1) mittels einer der Füllmaschine (2) zugeordneten Steuerung ansteuerbar ist, wobei die Steuerung so ausgebildet ist, dass die Antriebseinrichtung (6) der Portioniervorrichtung (1) und einen Antrieb der Pumpe der Füllmaschine (2) aufeinander abgestimmt vorzugsweise intermittierend angetrieben werden können.
